(19) **Europäisches Patentamt**

**European Patent Office**

**Office européen des brevets**

(11) **EP 0 992 707 B1**

(12) **EUROPÄISCHE PATENTSCHRIFT**

(45) Veröffentlichungstag und Bekanntmachung des Hinweises auf die Patenterteilung:
**17.12.2003 Patentblatt 2003/51**

(51) Int Cl.⁷: $F16H\ 3/54$, $F02B\ 67/04$

(21) Anmeldenummer: **99119550.4**

(22) Anmeldetag: **01.10.1999**

(54) **Zweigang-Getriebe, insbesondere Vorsatzgetriebe für Nebenaggregate in Kraftfahrzeugen**

Two-speed gearing especially series gear for auxiliary aggregates in vehicles

Transmission à deux vitesses, notamment boite de vitesses en série pour unites auxiliaires en véhicules

(84) Benannte Vertragsstaaten:
**DE ES FR GB IT**

(30) Priorität: **07.10.1998 DE 19846183**

(43) Veröffentlichungstag der Anmeldung:
**12.04.2000 Patentblatt 2000/15**

(73) Patentinhaber: **ROBERT BOSCH GMBH**
**70442 Stuttgart (DE)**

(72) Erfinder: **Schnelle, Klaus-Peter, Dr.-Ing.**
**71254 Ditzingen (DE)**

(56) Entgegenhaltungen:
| | |
|---|---|
| EP-A- 0 507 431 | EP-A- 0 548 955 |
| AT-B- 129 646 | US-A- 4 408 502 |
| US-A- 5 360 380 | |

**Beschreibung**

Die Erfindung betrifft ein Zweigang-Getriebe, insbesondere Vorsatzgetriebe für Nebenaggregate in Kraftfahrzeugen, mit den im Oberbegriff des Anspruchs 1 genannten Merkmalen.

Stand der Technik

Zweigang-Getriebe der gattungsgemäßen Art sind bekannt. So ist beispielsweise in der US PS 4,854,192 ein zentrifugalkraftkontrolliertes Zweigang-Getriebe für Nebenaggregate in Kraftfahrzeugen beschrieben. Derartige Getriebe dienen beispielsweise dazu, eine von einer Antriebsmaschine des Kraftfahrzeuges bereitgestellte Eingangsdrehzahl auf eine Ausgangsdrehzahl des Getriebes zu untersetzen. Die Untersetzung erfolgt hierbei drehzahlabhängig von einer Drehzahl der Eingangswelle des Getriebes. Hierdurch wird erreicht, daß ein Nebenaggregat des Kraftfahrzeuges nicht den gesamten Drehzahlbereich der Antriebsmaschine des Kraftfahrzeuges aufnehmen muß. Bei dem aus der US PS 4,854,192 bekannten Zweigang-Getriebe ist nachteilig, daß dieses eine relativ große Bauform aufweist. Zum Untersetzen der Drehzahl sind axial zur Drehachse des Getriebes wirkende Mittel vorgesehen, die zu einem entsprechend großen Einbauraum führen. Ferner sind eine Vielzahl von Bauteilen anzuordnen, die zu einem verhältnismäßig hohen Herstellungsaufwand führen.

Vorteile der Erfindung

Das erfindungsgemäße Zweigang-Getriebe mit den im Anspruch 1 genannten Merkmalen bietet demgegenüber den Vorteil, daß dieses einfach aufgebaut ist und einen relativ kleinen Bauraum benötigt. Dadurch, daß ein Planetengetriebe des Zweigang-Getriebes einen mit der Eingangswelle drehfest verbundenen Planetenträger aufweist, dieser Planetenträger wenigstens ein inneres Planetenrad trägt, das auf einem Sonnenrad abrollt, das innere Planetenrad mit einem um eine Drehachse des inneren Planetenrades verschwenkbar gelagerten äußeren Planetenrad gekoppelt ist, das äußere Planetenrad an einem auf der Abtriebswelle drehfest angeordneten Hohlrad abrollt, wobei das Hohlrad einen inneren und einen äußeren Zahnkranz aufweist, und das äußere Planetenrad in Abhängigkeit einer Drehzahl der Eingangswelle an dem inneren oder dem äußeren Zahnkranz des Hohlrades abrollt, ist vorteilhaft möglich, durch eine einfache Fliehkraftumschaltung des Zweigang-Getriebes, die lediglich radial zu einer Rotationsachse des Getriebes verlagerbare Bauelemente aufweist, eine Drehzahlumschaltung zu realisieren. Hierdurch kann eine besonders kleine Bauform des Zweigang-Getriebes realisiert werden, da auf die Anordnung von axial verschieblich gelagerten Bauelementen verzichtet werden kann. Durch Anordnung aller Übertragungselemente des Zweigang-Getriebes im wesentlichen in einer zur Drehachse liegenden radialen Ebene, wird eine sehr kurze und kompakte Bauform des Getriebes erreicht.

In bevorzugter Ausgestaltung der Erfindung ist vorgesehen, daß sich das äußere Planetenrad über ein elastisches Element, vorzugsweise eine Zugfeder, am Planetenträger abstützt. Hierdurch wird in einfacher Weise möglich, entsprechend der Federkraft des elastischen Elementes eine drehzahlabhängige Fliehkraftumschaltung des Zweigang-Getriebes zu realisieren. Insbesondere, wenn die Zugfeder eine degressive Federkennlinie aufweist, läßt sich ein stabiler Umschaltzeitpunkt der Fliehkraftumschaltung einstellen. Bei geringfügigen Schwankungen der Eingangsdrehzahl des Getriebes im Bereich der Umschaltdrehzahl können somit in einfacher Weise Pendelbewegungen des äußeren Planetenrades verhindert werden.

In weiterer bevorzugter Ausgestaltung der Erfindung ist vorgesehen, daß das Sonnenrad des Zweigang-Getriebes über eine Rutschkupplung auf einer feststehenden Achse gelagert ist. Hierdurch wird in einfacher Weise möglich, während des Schaltens der Fliehkraftumschaltung Schaltstöße auf das Sonnenrad zu vermeiden. Entsprechend der eingestellten Kraft der Rutschkupplung können diese Schaltstöße abgefangen und abgeleitet werden.

In weiterer bevorzugter Ausgestaltung der Erfindung ist vorgesehen, daß das Zweigang-Getriebe eine Vielzahl von inneren und äußeren Planetenrädern aufweist, die vorzugsweise in Umfangsrichtung miteinander gekoppelt sind. Hierdurch läßt sich eine besonders gute Kraftübertragung des Zweigang-Getriebes erreichen, da diese auf die Vielzahl der Planetenräder aufgeteilt ist. Dadurch, daß die Schwenkarme der äußeren Planetenräder miteinander verbunden sind, wird gewährleistet, daß beim Erreichen der Umschaltdrehzahl ein gleichmäßiges Umschalten aller Planetenräder des Zweigang-Getriebes erfolgt. Insofern wird eine exakte Einstellung der Umschaltdrehzahl möglich.

Weitere bevorzugte Ausgestaltungen der Erfindung ergeben sich aus den übrigen, in den Unteransprüchen genannten Merkmalen.

Zeichnungen

Die Erfindung wird nachfolgend in einem Ausführungsbeispiel anhand der zugehörigen Zeichnungen näher erläutert. Es zeigen:

Figur 1     eine schematische Seitenansicht auf ein Zweigang-Getriebe;

Figur 2     eine schematische Schnittdarstellung durch das Zweigang-Getriebe;

Figur 3     eine schematische Darstellung des Zweigang-Getriebes in einer ersten Schaltstellung;

Figur 4    eine schematische Darstellung des Zweigang-Getriebes in einer zweiten Schaltstellung und

Figur 5    eine Drehzahlkennlinie des Zweigang-Getriebes.

Beschreibung des Ausführungsbeispiels

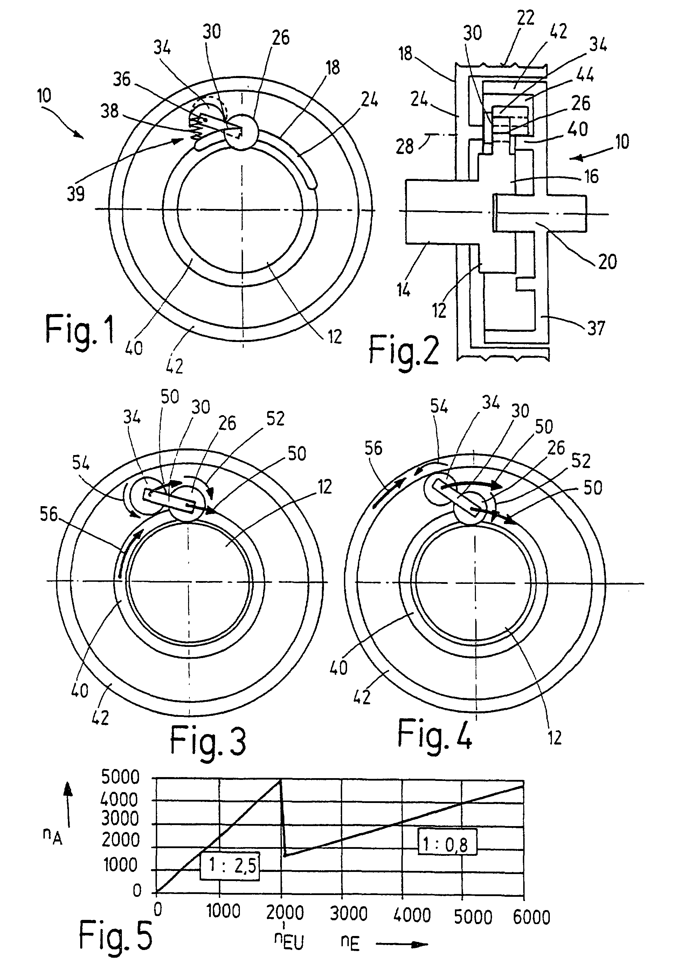

In den Figuren 1 und 2 ist ein insgesamt mit 10 bezeichnetes Zweigang-Getriebe schematisch dargestellt. Figur 1 zeigt hierbei eine schematische Seitenansicht, während Figur 2 eine schematische Schnittansicht zeigt. Das Zweigang-Getriebe 10 umfaßt ein Sonnenrad 12, das auf einem feststehenden Wellenstutzen 14 angeordnet ist. Das Sonnenrad 12 ist auf dem Wellenstutzen 14 über eine, hier lediglich angedeutete Rutschkupplung 16 angeordnet.

Das Zweigang-Getriebe 10 umfaßt ferner eine Antriebswelle (Eingangswelle) 18 sowie eine Abtriebswelle (Ausgangswelle) 20. Die Antriebswelle 18 ist mit einer Aufnahme 22 für ein Antriebsmittel, beispielsweise ein Keilriemen, Zahnriemen oder dergleichen, ausgestattet. An einem Planetenträger 24 der Antriebswelle 18 ist ein inneres Planetenrad 26 drehbar gelagert. Das innere Planetenrad 26 ist hierbei um eine Drehachse 28 rotierbar. Das innere Planetenrad 26 kämmt mit einer, in der schematischen Darstellung nicht dargestellten Verzahnung eine Verzahnung des Sonnenrades 12. Der Planetenträger 24 trägt ferner einen Schwenkarm 30, der um die Drehachse 28 verschwenkbar gelagert ist. An seinem freien Ende 32 trägt der Schwenkarm 30 ein äußeres Planetenrad 34. Das Planetenrad 34 ist hierbei um eine Drehachse 36 rotierbar. Ein Durchmesser der Planetenräder 26 und 34 ist gleich groß gewählt. Die Planetenräder 26 und 34 sind so angeordnet, daß deren Verzahnungen kämmen. Der Schwenkarm 30 ist mit dem Planetenträger 24 über ein Federelement 38 verbunden. Das Federelement 38 ist als Zugfeder 39 ausgebildet. In der in Figur 1 gezeigten Ausgangslage ist die Zugfeder 39 vorgespannt, das heißt, der Schwenkarm 30 wird durch die Zugfeder 39 in Richtung des Planetenträgers 24 mit einer Federkraft beaufschlagt.

Die Abtriebswelle 20 trägt drehfest ein Hohlrad 37. Das Hohlrad 37 besitzt einen inneren Zahnkranz 40 und einen äußeren Zahnkranz 42. Die Zähne des inneren Zahnkranzes 40 weisen radial nach außen, während die Zähne des äußeren Zahnkranzes 42 radial nach innen weisen. In einem, von den Zahnkränzen 40 und 42 ausgebildeten Freiraum 44 greift das äußere Planetenrad 34 ein. In dem in den Figuren 1 und 2 gezeigten Ruhezustand des Getriebes 10 wird das äußere Planetenrad 34 durch die Kraft des Federelementes 38 gegen den inneren Zahnkranz 40 gedrückt, so daß das Planetenrad 34 den inneren Zahnkranz 40 kämmt.

Bei dem gezeigten Ausführungsbeispiel ist lediglich eine Planetenanordnung mit einem inneren Planetenrad 26 und einem äußeren Planetenrad 34 vorgesehen. Nach weiteren Ausführungsbeispielen kann vorgesehen sein, über den Umfang des Sonnenrades 12 mehrere, beispielsweise drei oder vier, der aus dem inneren Planetenrad 26 und dem äußeren Planetenrad 34 bestehende Anordnungen anzuordnen.

Anhand der Figuren 3 und 4 wird die Funktionsweise des Zweigang-Getriebes 10 näher erläutert. Gleiche Teile wie in den Figuren 1 und 2 sind mit gleichen Bezugszeichen versehen und nicht nochmals erläutert.

Die Antriebswelle 18 wird über ein in die Aufnahme 22 eingreifendes Antriebsmittel angetrieben. Dies kann beispielsweise ein Zahnriemen sein, der von einer Abtriebswelle einer Brennkraftmaschine eines Kraftfahrzeuges angetrieben ist. Entsprechend einer Drehzahl der Abtriebswelle der Brennkraftmaschine ergibt sich eine Drehzahl der Antriebswelle 18. Diese wird über den Planetenträger 24 auf das innere Planetenrad 26 übertragen, das mit entsprechender Umdrehungsgeschwindigkeit auf dem feststehenden Sonnenrad 12 abrollt. Hierbei wird eine Bewegungsrichtung 50 in Uhrzeigersinn angenommen. Entsprechend der Rotation des inneren Planetenrades 26 um das Sonnenrad 12 rollt dieses ebenfalls in Uhrzeigersinn 52 auf dem Sonnenrad 12 ab. Dadurch, daß das äußere Planetenrad 34 das innere Planetenrad 26 kämmt, erfährt dieses eine Drehung 54 entgegen dem Uhrzeigersinn und wird gleichzeitig entsprechend der Antriebsdrehzahl in Uhrzeigersinn 50 um das Sonnenrad 12 bewegt. Durch die Kraft des Federelementes 38 wird das äußere Planetenrad 34 auf den inneren Zahnkranz 40 des Hohlrades 37 gezogen, so daß die entgegen dem Uhrzeigersinn gerichtete Drehung 54 des äußeren Planetenrades 34 in eine Drehbewegung 56 des Hohlrades 37 in Uhrzeigersinn umgesetzt wird. Die Antriebsdrehung 50 im Uhrzeigersinn und die Drehung 54 des äußeren Planetenrades 34 entgegen dem Uhrzeigersinn wirken am Eingriffspunkt zwischen äußerem Planetenrad 34 und Zahnkranz 40 in die gleiche Umfangsrichtung, das heißt, sie addieren sich und ergeben eine schnelle Drehbewegung 56 des Hohlrades im Uhrzeigersinn.

Steigt die Drehzahl der Antriebswelle 18 weiter an, beispielsweise indem die Drehzahl der Abtriebswelle der Brennkraftmaschine sich erhöht, wirken auf das äußere Planetenrad 34 und den Schwenkarm 30 Fliehkräfte, die mit steigender Drehzahl zunehmen. Wird eine bestimmte Umschaltdrehzahl erreicht, wird der Schwenkarm 30 und somit das äußere Planetenrad 34 infolge der angreifenden Fliehkräfte radial nach außen verlagert, so daß das äußere Planetenrad 34 mit dem äußeren Zahnkranz 42 des Hohlrades 37 kämmt. Da die Drehrichtung 54 des äußeren Planetenrades 34 am Kontaktpunkt mit dem Hohlrad 37, hier mit dem äußeren Zahnkranz 42, nunmehr der Drehbewegung 56 - die durch die überlagernde Bewegung 50 hervorgerufen wird - des Hohlrades 37 entgegengesetzt ist, übt diese einen bremsenden Einfluß auf das Hohlrad 37 und somit auf die mit dem Hohlrad 37 drehfest verbundene Abtriebswelle 20 des Getriebes 10 aus. Die Antriebsdrehung 50 im Uhrzeigersinn und die Drehung 54 des äußeren Planetenrades 34 entgegen dem Uhrzeigersinn wirken am Eingriffspunkt zwischen äußerem Planetenrad 34 und Zahnkranz 42 in entgegengesetzte Umfangsrichtungen, das heißt, die Drehung 54 reduziert die aus der Drehung 50 entstehende Umfangsgeschwindigkeit und die resultierende Drehbewegung 56 des Hohlrades im Uhrzeigersinn ist gegenüber dem in Figur 1 beschriebenen Fall niedriger.

In Figur 5 ist beispielhaft eine Kennlinie eines Drehzahlverlaufes des Getriebes 10 dargestellt. Hierbei ist über der Eingangsdrehzahl $n_E$ der Antriebswelle 18 die Ausgangsdrehzahl $n_A$ der Abtriebswelle 20 jeweils in Umdrehungen pro Minute dargestellt. Anhand des Kennlinienverlaufes wird dargestellt, daß - entsprechend dem in Figur 3 gezeigten Schaltzustand - mit steigender Eingangsdrehzahl $n_E$ im relativ niedrigen Bereich die Ausgangsdrehzahl $n_A$ relativ steil ansteigt. Entsprechend dem Kontakt des äußeren Planetenrades 34 mit dem inneren Zahnkranz 40 des Hohlrades 37 wird eine niedrige Eingangsdrehzahl $n_E$ mit hoher Übersetzung in eine Ausgangsdrehzahl $n_A$ umgesetzt.

Mit Erreichen einer Umschalt-Eingangsdrehzahl $n_{EU}$, die beispielsweise 2000 U/min beträgt, übersteigen die Fliehkräfte, die auf das äußere Planetenrad 34 und den Schwenkarm 30 wirken, die Federkraft des Federelementes 38, so daß die in Figur 4 gezeigte Schaltstellung des Getriebes 10 eingenommen wird. Hierdurch fällt die Ausgangsdrehzahl $n_A$ abrupt ab und steigt mit weiter steigender Eingangsdrehzahl $n_E$ mit relativ flacher Kennlinie wieder an. Somit wird ab der Umschalt-Eingangsdrehzahl $n_{EU}$ eine relativ hohe Eingangsdrehzahl $n_E$ mit niedriger Übersetzung auf die Ausgangsdrehzahl $n_A$ umgesetzt.

Nach allem wird klar, daß durch das erfindungsgemäße Zweigang-Getriebe 10 eine selbsttätige Einstellung einer Übersetzung abhängig von der Eingangsdrehzahl $n_E$ möglich ist. Bei kleinen Eingangsdrehzahlen $n_E$ besitzt das Getriebe 10 eine große Übersetzung, während bei großen Eingangsdrehzahlen $n_E$ dieses eine kleine Übersetzung besitzt. Hierdurch wird möglich, ein mit der Abtriebswelle 20 des Getriebes 10 gekoppeltes Aggregat, beispielsweise einen Generator, eine Lenkhilfpumpe, einen Klimakompressor oder dergleichen, in Kraftfahrzeugen nicht mit dem gesamten Drehzahlbereich einer Brennkraftmaschine anzutreiben. Hierdurch läßt sich die Funktion und ein Wirkungsgrad dieser Komponenten optimieren.

Die Übersetzungen des Zweigang-Getriebes 10 in den beiden Schaltstufen, das heißt das Verhältnis der Ausgangsdrehzahl $n_A$ zur Eingangsdrehzahl $n_E$, ergibt sich aus Beziehung:

$$\ddot{U} = 1 \pm r_{12}/r_{37},$$

wobei $r_{12}$ der Radius des Sonnenrades 12 und $r_{37}$ der Radius des Hohlrades 37 ist. Entsprechend der Schaltstellung des Getriebes 10 (wie in den Figuren 3 und 4 verdeutlicht) wird $r_{37}$ entweder durch $r_{40}$ oder $r_{42}$ bestimmt, wobei $r_{40}$ der Radius des inneren Zahnkranzes 40 und $r_{42}$ der Radius des äußeren Zahnkranzes 42 ist. Somit gilt entsprechend der Darstellung in Figur 3:

$$\ddot{U}1 = 1 + r_{12}/r_{40}$$

und entsprechend der Darstellung in Figur 4:

$$\ddot{U}2 = 1 - r_{12}/r_{42},$$

wobei $\ddot{U}1$ die Übersetzung bis zur Umschalt-Eingangsdrehzahl $n_{EU}$ und $\ddot{U}2$ die Übersetzung oberhalb der Umschalt-Eingangsdrehzahl $n_{EU}$ ist.

Das Minuszeichen entsteht dadurch, daß Drehung 54 der Drehung 50 entgegengesetzt ist und dadurch am oberen Eingriffspunkt 34 - 42 eine "bremsende" Komponente entsteht. In Figur 3 dagegen wirkt am unteren Eingriffspunkt 34 - 40 die Geschwindigkeit aus den Drehungen 50 und 54 jeweils in die gleiche Umfangsrichtung.

Entsprechend der über die Verhältnisse der Radien $r_{40}$ beziehungsweise $r_{42}$ einstellbaren Übersetzungen ergibt sich eine Spreizung $\ddot{U}1/\ddot{U}2$ des Getriebes 10 entsprechend der Beziehung:

$$\ddot{U}1/\ddot{U}2 = (1 + r_{12}/r_{40})/(1 - r_{12}/r_{42}) \,.$$

Eine für Nebenaggregate, insbesondere in Kraftfahrzeugen, geeignete Spreizung von $\ddot{U}1/\ddot{U}2 = 3$ erhält man beispielsweise durch Einstellen von Radienverhältnissen r40/r12 = 1,5...1,6 und r42/r12 = 2,2...2,3.

Die Umschalt-Eingangsdrehzahl $n_{EU}$ kann durch eine Auslegung des Federelementes 38 und/oder einer Massenverteilung des Schwenkarmes 30 erfolgen. Je höher eine Federkraft der Zugfeder 39 gewählt ist, um so höher ist die Umschalt-Eingangsdrehzahl $n_{EU}$, da eine höhere Zentrifugalkraft (die abhängig ist von der Eingangsdrehzahl $n_E$) notwendig ist, um das äußere Planetenrad 34 vom inneren Zahnkranz 40 auf den äußeren Zahnkranz 42 umzuschalten. Die Federkennlinie der Zugfeder 39 ist hierbei degressiv, das heißt, mit größerer Auslenkung der Zugfeder 39 nimmt die Federkraft ab. Hierdurch wird erreicht, daß bei Erreichen der Umschalt-Eingangsdrehzahl $n_{EU}$ ein Flattern des äußeren Planetenrades 34 nicht auftritt. Zum Rückschalten des Getriebes 10 von der Übersetzung $\ddot{U}2$ auf die Übersetzung $\ddot{U}1$ muß somit die Eingangsdrehzahl $n_E$ unterhalb der Umschalt-Eingangsdrehzahl $n_{EU}$ abfallen. Durch die degressive Federkennlinie wird im Umschaltzeitpunkt die Fliehkraft größer als die Federkraft, so daß sich kein Gleichgewicht zwischen Federkraft und Fliehkraft einstellen kann.

Um einen mechanischen Schaltstoß während des Umschaltens der Kupplung abfangen zu können, ist das Sonnenrad 12 über eine Rutschkupplung 16 auf dem Wellenstutzen 14 angeordnet. Hierdurch können kurzzeitig einwirkende mechanische Kräfte infolge einer mechanischen Kontaktierung des äußeren Planetenrades 34 entweder mit dem inneren Zahnkranz 40 oder dem äußeren Zahnkranz 42 abgefangen werden, indem die Rutschkupplung 16 kurz durchrutscht. Nach erfolgter Umschaltung überwiegt wieder die Kupplungskraft der Rutschkupplung 16, so daß das Sonnenrad 12 fest auf dem Wellenstutzen 14 angeordnet ist.

In einer alternativen Ausführung können die Kontakte des äußeren Planetenrades 34 zu den Hohlradflächen 40 und 42 statt als Verzahnung auch als Reibpaarung ausgebildet sein. Damit vermeidet man Geräusche, die (trotz Rutschkupplung) durch das Eingreifen der Zähne entstehen können.

**Patentansprüche**

1. Zweigang-Getriebe, insbesondere Vorsatzgetriebe für Nebenaggregate in Kraftfahrzeugen, mit einer Antriebswelle (18), mit einer Abtriebswelle (20) und mit einem die Antriebswelle mit der Abtriebswelle kuppelnden Planetengetriebe, wobei das Planetengetriebe einen an der Antriebswelle (18) drehfest angeordneten Planetenträger (24) aufweist, der wenigstens ein inneres Planetenrad (26) trägt, das auf einem Sonnenrad (12) abrollt, **dadurch gekennzeichnet, daß** das innere Planetenrad (26) mit einem um eine Drehachse (28) des inneren Planetenrades (26) verschwenkbar gelagerten äußeren Planetenrad (34) gekoppelt ist, das äußere Planetenrad (34) an einem auf der Abtriebswelle (20) drehfest angeordneten Hohlrad (37) abrollt, wobei das Hohlrad (37) einen inneren Zahnkranz (40) und einen äußeren Zahnkranz (42) aufweist, und das äußere Planetenrad (34) in Abhängigkeit einer Eingangsdrehzahl ($n_E$) der Antriebswelle (18) an dem inneren Zahnkranz (40) oder dem äußeren Zahnkranz (42) des Hohlrades (37) abrollt.

2. Zweigang-Getriebe nach Anspruch 1, **dadurch gekennzeichnet, daß** das äußere Planetenrad (34) über ein elastisches Element (38) am Planetenträger (24) abgestützt ist.

3. Zweigang-Getriebe nach Anspruch 2, **dadurch gekennzeichnet, daß** das elastische Element (38) eine Zugfeder (39) ist.

4. Zweigang-Getriebe nach Anspruch 3, **dadurch gekennzeichnet, daß** die Zugfeder (39) eine degressive Federkennlinie aufweist.

5. Zweigang-Getriebe nach einem der vorhergehenden Ansprüche, **dadurch gekennzeichnet, daß** das innere Planetenrad (26) mit dem äußeren Planetenrad (34) über einen um die Drehachse (28) verschwenkbar gelagerten Schwenkarm (30) verbunden ist.

6. Zweigang-Getriebe nach einem der vorhergehenden Ansprüche, **dadurch gekennzeichnet, daß** das Sonnenrad (12) über eine Rutschkupplung (16) auf einem feststehenden Wellenstutzen (14) gelagert ist.

7. Zweigang-Getriebe nach einem der vorhergehenden Ansprüche, **dadurch gekennzeichnet, daß** das Planetengetriebe eine Vielzahl von miteinander gekoppelten inneren Planetenrädern (26) und äußeren Planetenrädern (34) aufweist.

8. Zweigang-Getriebe nach Anspruch 7, **dadurch gekennzeichnet, daß** die äußeren Planetenräder (34) miteinander wirkverbunden sind.

9. Zweigang-Getriebe nach einem der vorhergehenden Ansprüche, **dadurch gekennzeichnet, daß** die Zahnkränze (40) und (42) einen Freiraum (44) ausbilden, in den das äußere Planetenrad (34) eingreift, wobei der innere Zahnkranz (40) radial nach außen gerichtete Zähne und der äußere Zahnkranz (42) radial nach innen gerichtete Zähne besitzt.

10. Zweigang-Getriebe nach einem der vorhergehenden Ansprüche, **dadurch gekennzeichnet, daß** das äußere Planetenrad (34) und die Zahnkränze (40, 42) als Reibflächen ausgebildete Kontaktflächen aufweisen.

11. Zweigang-Getriebe, insbesondere nach einem der vorhergehenden Ansprüche, **dadurch gekennzeichnet, daß** es als Vorsatzgetriebe für Nebenaggregate in Kraftfahrzeugen verwendet wird.

**Claims**

1. Two-speed transmission, in particular adapter transmission for auxiliary units in motor vehicles, comprising a drive shaft (18), a driven shaft (20) and a planetary transmission, which couples the drive shaft to the driven shaft, the planetary transmission having a planet carrier (24), which is arranged in a rotationally fixed manner on the drive shaft (18) and carries at least one inner planetary gear (26), which rolls on a sun gear (12), **characterized in that** the inner planetary gear (26) is coupled to an outer planetary gear (34) supported in such a way as to be pivotable about an axis of rotation (28) of the inner planetary gear (26), the outer planetary gear (34) rolls on an annulus (37), which is arranged in a rotationally fixed manner on the driven shaft (20), the annulus (37) having an inner gear rim (40) and an outer gear rim (42), and the outer planetary gear (34) rolls on the inner gear rim (40) or on the outer gear rim (42) of the annulus (37), depending on an input rotary speed ($n_E$) of the drive shaft (18).

2. Two-speed transmission according to Claim 1, **characterized in that** the outer planetary gear (34) is supported on the planet carrier (24) via an elastic element (38).

3. Two-speed transmission according to Claim 2, **characterized in that** the elastic element (38) is a tension spring (39).

4. Two-speed transmission according to Claim 3, **characterized in that** the tension spring (39) has a degressive spring characteristic.

5. Two-speed transmission according to one of the preceding claims, **characterized in that** the inner planetary gear (26) is connected to the outer planetary gear (34) by a pivot arm (30), which is supported in such a way as to be pivotable about the axis of rotation (28).

6. Two-speed transmission according to one of the preceding claims, **characterized in that** the sun gear (12) is supported on a stationary shaft stub (14) via a slip clutch (16).

7. Two-speed transmission according to one of the preceding claims, **characterized in that** the planetary transmission has a plurality of inner planetary gears (26) and outer planetary gears (34) which are coupled to one another.

8. Two-speed transmission according to Claim 7, **characterized in that** the outer planetary gears (34) are operatively connected to one another.

9. Two-speed transmission according to one of the preceding claims, **characterized in that** the gear rims (40) and (42) form a free space (44), in which the outer planetary gear (34) engages, the inner gear rim (40) having teeth which are oriented radially outwards and the outer gear rim (42) having teeth which are oriented radially inwards.

10. Two-speed transmission according to one of the preceding claims, **characterized in that** the outer planetary gear (34) and the gear rims (40, 42) have contact surfaces which are designed as friction surfaces.

11. Two-speed transmission, in particular according to one of the preceding claims, **characterized in that** it is used as an adapter transmission for auxiliary units in motor vehicles.

## Revendications

1. Boite de vitesses à deux rapports, notamment la boîte de vitesses intermédiaire pour des équipements de véhicule automobile, comportant un arbre d'entraînement (18), un arbre de sortie (20) et une transmission planétaire et couplant l'arbre d'entrée à l'arbre de sortie, la transmission planétaire ayant un porte-satellite (24) monté solidairement en rotation sur l'arbre d'entraînement (18), ce porte-satellite étant muni d'au moins une roue planétaire intérieure (26) roulant sur une roue solaire (12).
   **caractérisée en ce que**
   la roue planétaire intérieure (26) est couplée à une roue planétaire extérieure (34) montée pivotante autour d'un axe de rotation (28) de la roue planétaire intérieure (26).
   la roue planétaire extérieure (34) roule sur une roue creuse (37) solidaire de l'arbre de sortie (20). la roue creuse (37) ayant une couronne dentée intérieure (40) et une couronne dentée extérieure (42), et en fonction d'une vitesse de rotation d'entrée $n_E$ de l'arbre d'entraînement (18) la roue planétaire (34) roule sur la couronne dentée intérieure (40) ou la couronne dentée extérieure (42) de la roue creuse (37).

2. Boîte de vitesses à deux rapports selon la revendication 1,
   **caractérisée en ce que**
   la roue planétaire extérieure (34) est soutenue par un élément élastique (38) sur le porte-satellite (24).

3. Boite de vitesses à deux rapports selon la revendication 2,
   **caractérisé en ce que**
   l'élément élastique (38) est un ressort de traction (39).

4. Boîte de vitesses à deux rapports selon la revendication 3,
   **caractérisée en ce que**
   le ressort de traction (39) présente une courbe caractéristique de ressort dégressive.

5. Boite de vitesse à deux rapports selon l'une des revendications précédentes,
   **caractérisée en ce que**
   la roue planétaire intérieure (26) est reliée à la roue planétaire extérieure (34) par un bras pivotant (30) monté pivotant autour de l'axe de rotation (28).

6. Boîte de vitesses à deux rapports selon l'une des revendications,

**caractérisé en ce que**
la roue solaire (12) est montée par l'embrayage à cliquet (16) sur l'élément d'axe (14) fixe.

7. Boîte de vitesses à deux rapports selon l'une des revendications précédentes.
**caractérisée en ce que**
la transmission planétaire comporte un grand nombre de roues planétaires intérieures (26) et de roues planétaires extérieures (34) couplées entre elles.

8. Boite de vitesses à deux rapports selon la revendication 7,
**caractérisée en ce que**
les roues planétaires extérieures (34) coopèrent les unes avec les autres.

9. Boite de vitesses à deux rapports selon l'une des revendications précédentes,
**caractérisée en ce que**
les couronnes dentées (40, 42) forment un espace libre (44) dans lequel pénètre la roue planétaire extérieure (34),
la couronne dentée intérleure (40) ayant des dents dirigées radialement vers l'extérieur et la couronne dentée extérieure (42) ayant des dents dirigées radialement vers l'intérieur.

10. Boite de vitesses à deux rapports selon l'une des revendications précédentes,
**caractérisée en ce que**
la roue planétaire extérieure (34) et les couronnes dentées (40, 42) ont des surfaces de contact réalisées sous la forme de surface de friction.

11. Boîte de vitesses à deux rapports selon l'une des revendications précédentes,
**caractérisée en ce qu'**
elle est utilisée comme transmission intermédiaire pour des équipements de véhicule automobile.

Fig.1

Fig.2

Fig.3

Fig.4

Fig.5